# EUROPÄISCHE PATENTSCHRIFT

(11) **EP 3 635 494 B1**
(45) Veröffentlichungstag und Bekanntmachung des Hinweises auf die Patenterteilung: **14.04.2021**
(21) Anmeldenummer: 18730324.3
(22) Anmeldetag: 06.06.2018
(51) Int. Cl.: G05B 19/04, B23Q 11/10

(54) **VERFAHREN ZUM BETREIBEN EINER WERKZEUGMASCHINE UND WERKZEUGMASCHINE**
METHOD FOR OPERATING A MACHINE TOOL, AND MACHINE TOOL
DISPOSITIF DE FONCTIONNEMENT D'UNE MACHINE-OUTIL ET MACHINE-OUTIL

(30) Priorität: 09.06.2017 DE 102017209822
(43) Veröffentlichungstag der Anmeldung: 15.04.2020
(73) Patentinhaber: MAG IAS GmbH, 73054 Eislingen (DE)
(72) Erfinder: DAVIS, Ralph, 73054 Eislingen (DE); FONDY, Horst, 73037 Göppingen (DE); MENZE, Jürgen, 73333 Gingen an der Fils (DE)
(74) Vertreter: Rau, Schneck & Hübner Patentanwälte Rechtsanwälte PartGmbB
(86) Internationale Anmeldenummer: PCT/EP2018/064841
(87) Internationale Veröffentlichungsnummer: WO 2018/224526

(56) Entgegenhaltungen:
- EP-A2- 0 714 053
- DE-A1- 10 238 203
- DE-A1- 10 248 932

## Beschreibung

Die Erfindung betrifft ein Verfahren zum Betreiben einer Werkzeugmaschine sowie eine Werkzeugmaschine.

Bei der spanenden Bearbeitung eines Werkstücks mittels einer Werkzeugmaschine wird üblicherweise ein Kühlschmiermittel zu der Bearbeitungsstelle des Werkzeugs an dem Werkstück zugeführt. Die exakte Zuführung des Kühlschmiermittels ist schwierig, da diese von dem verwendeten Werkzeug abhängig ist. Aus der DE 102 48 932 A1 ist ein Verfahren zur Versorgung einer Bearbeitungsstelle mit einem Schmiermittel bekannt, bei dem Schmiermittelströme in einem Datenspeicher abgelegt sind, denen bestimmte Werkzeugdurchmesser des Werkzeugs zugeordnet sind. Bei Auswahl eines bestimmten Werkzeugdurchmessers wird der zugehörige Schmiermittelstrom als Sollwert einem Regelkreis vorgegeben.

Aus der EP 0 714 053 A2 ist ein Verfahren und eine Vorrichtung zum Erfassen und Steuern eines Spanaufbaus bekannt.

Aus der DE 102 38 203 A1 ist eine Werkzeugmaschine mit Minimalmengenschmierung bekannt.

Der Erfindung liegt die Aufgabe zugrunde, ein Verfahren zum Betreiben einer Werkzeugmaschine zu schaffen, das in einfacher und flexibler Weise eine schnelle und exakte Zuführung von Kühlschmiermittel zu den Bearbeitungsstellen wechselnder Werkzeuge ermöglicht.

Diese Aufgabe wird durch ein Verfahren mit den Merkmalen des Anspruchs 1 gelöst. Erfindungsgemäß wurde erkannt, dass die Reglerparameter zur Regelung der Pumpe und zur Zuführung des Kühlschmiermittels anhand eines maschinenspezifischen Strömungswiderstandes und eines werkzeugspezifischen Strömungswiderstandes werkzeugspezifisch eingestellt werden müssen, um eine schnelle und exakte Zuführung des Kühlschmiermittels zu der Bearbeitungsstelle des jeweils in der mindestens einen Werkzeugspindel gespannten Werkzeugs zu ermöglichen. Der maschinenspezifische Strömungswiderstand ist unabhängig von dem jeweils gespannten Werkzeug und charakterisiert den Strömungswiderstand für das Kühlschmiermittel aufgrund der Maschineninstallation bzw. der Zuleitungsinstallation der Werkzeugmaschine. Demgegenüber ist der werkzeugspezifische Strömungswiderstand abhängig von dem jeweils in der mindestens einen Werkzeugspindel gespannten Werkzeug und charakterisiert den Strömungswiderstand für das Kühlschmiermittel aufgrund des jeweiligen Werkzeugs bzw. des jeweiligen in der mindestens einen Werkzeugspindel gespannten Werkzeugs. Mittels des maschinenspezifischen Strömungswiderstandes und des werkzeugspezifischen Strömungswiderstandes werden werkzeugspezifische Reglerparameter zur Regelung der Pumpe und zur Zuführung des Kühlschmiermittels zu dem jeweils gespannten Werkzeug berechnet. Durch das anschließende Betreiben der Werkzeugmaschine mit den werkzeugspezifischen Reglerparametern ist eine schnelle und exakte Zuführung von Kühlschmiermittel zu der Bearbeitungsstelle des jeweils gespannten Werkzeugs möglich. Die Zuführung des Kühlschmiermittels zu der Bearbeitungsstelle erfolgt schnell und insbesondere mit einem nur geringen Überschwingen, so dass die Zuführung des Kühlschmiermittels auch exakt erfolgt. Dadurch, dass der maschinenspezifische Strömungswiderstand ausschließlich von der Maschineninstallation abhängig ist, muss dieser lediglich einmalig bestimmt werden und steht anschließend zur Berechnung von werkzeugspezifischen Reglerparametern für verschiedene Werkzeuge zur Verfügung. Der werkzeugspezifische Strömungswiderstand muss für das jeweilige Werkzeug ebenfalls lediglich einmalig bestimmt werden und steht anschließend bei einer erneuten Verwendung des Werkzeugs zur Berechnung der werkzeugspezifischen Reglerparameter zur Verfügung. Hierdurch vereinfacht sich die Berechnung der werkzeugspezifischen Reglerparameter mit fortlaufendem Betrieb der Werkzeugmaschine. Die Berechnung der werkzeugspezifischen Reglerparameter ist somit einfach und flexibel für verschiedene Werkzeuge durchführbar.

Ein Verfahren nach Anspruch 2 gewährleistet eine einfache Ermittlung des maschinenspezifischen Strömungswiderstandes. Dadurch, dass die Werkzeugmaschine, insbesondere testweise, ohne ein in der mindestens einen Werkzeugspindel gespanntes Werkzeug betrieben wird, ist in einfacher Weise der maschinenspezifische Strömungswiderstand ermittelbar. Ein Betreiben der Werkzeugmaschine ohne ein gespanntes Werkzeug ist beispielsweise derart realisierbar, dass ein Werkzeughalter ohne ein Werkzeug oder ein Werkzeughalter mit einem Werkzeug, das jedoch keinen Einfluss auf die Messung des maschinenspezifischen Strömungswiderstandes hat, gespannt ist. Dieses Werkzeug hat beispielsweise einen derart großen Strömungsquerschnitt, dass es keinen Einfluss auf die Ermittlung des maschinenspezifischen Strömungswiderstandes hat. Bei einer mehrspindligen bzw. zweispindligen Ausführung der Werkzeugmaschine wird der maschinenspezifische Strömungswiderstand jeweils für den Betrieb der Werkzeugmaschine mit unterschiedlichen Werkzeugspindelkonstellationen bestimmt, also in Abhängigkeit der Anzahl aktiver Werkzeugspindeln. Weist die Werkzeugmaschine beispielsweise zwei Werkzeugspindeln auf, so wird ein maschinenspezifischer Strömungswiderstand für den einspindligen Betrieb und ein maschinenspezifischer Strömungswiderstand für den zweispindligen Betrieb bestimmt.

Ein Verfahren nach Anspruch 3 ermöglicht eine einfache Ermittlung des maschinenspezifischen Strömungswiderstandes. Der maschinenspezifische Strömungswiderstand wird beispielsweise aus einer gemessenen Pumpendrehzahl der Pumpe, einer bekannten Pumpenkennlinie und einem gemessenen Kühlschmiermitteldruck ermittelt, so dass lediglich eine geringe Anzahl an Messsensoren erforderlich ist. Bei mehrspindligen Werkzeugmaschinen wird der maschinenspezifische Strömungswiderstand zudem in Abhängigkeit der Anzahl aktiver Werkzeugspindeln ermittelt. Die Pumpenkennlinie gibt beispielsweise eine Abhängigkeit zwischen der Pumpendrehzahl, dem Pumpendruck und einem Volumenstrom an.

Ein Verfahren nach Anspruch 4 ermöglicht eine einfache und flexible Berechnung der werkzeugspezifischen Reglerparameter. Dadurch, dass der maschinenspezifische Strömungswiderstand unabhängig von dem jeweils in der mindestens einen Werkzeugspindel gespannten Werkzeug ist, kann dieser nach einer einmaligen Ermittlung gespeichert und zur Berechnung von werkzeugspezifischen Reglerparametern verschiedener Werkzeuge wiederverwendet werden.

Ein Verfahren nach Anspruch 5 ermöglicht eine einfache und flexible Ermittlung des jeweiligen werkzeugspezifischen Strömungswiderstandes. Durch ein, insbesondere testweises, Betreiben der Werkzeugmaschine mit dem in der mindestens einen Werkzeugspindel gespannten Werkzeug ist bei Kenntnis des maschinenspezifischen Strömungswiderstandes in einfacher Weise die Ermittlung des werkzeugspezifischen Strömungswiderstandes möglich. Bei einem erstmaligen Einsatz des jeweiligen Werkzeugs wird der werkzeugspezifische Strömungswiderstand durch das testweise Betreiben vor der Werkstückbearbeitung ermittelt. Mit den berechneten werkzeugspezifischen Reglerparametern kann anschließend ohne einen Werkzeugwechsel das Werkstück bearbeitet werden, wobei aufgrund der werkzeugspezifischen Reglerparameter eine schnelle und exakte Zuführung von Kühlschmiermittel zu der Bearbeitungsstelle gewährleistet ist.

Ein Verfahren nach Anspruch 6 ermöglicht in einfacher Weise die Ermittlung des jeweiligen werkzeugspezifischen Strömungswiderstandes. Bei einer einspindligen Werkzeugmaschine ist der Gesamt-Strömungswiderstand die Summe aus dem maschinenspezifischen Strömungswiderstand und dem werkzeugspezifischen Strömungswiderstand. Der Gesamt-Strömungswiderstand wird anhand von Messgrößen ermittelt. Beispielsweise wird der Gesamt-Strömungswiderstand aus einer gemessenen Pumpendrehzahl, einer bekannten Pumpenkennlinie und einem gemessenen Kühlschmiermitteldruck ermittelt. Durch die anschließende Subtraktion des maschinenspezifischen Strömungswiderstandes ergibt sich der jeweilige werkzeugspezifische Strömungswiderstand. Bei einer zweispindligen Werkzeugmaschine ergibt sich der Gesamt-Strömungswiderstand aus einer Reihenschaltung des maschinenspezifischen Strömungswiderstandes und der parallel geschalteten werkzeugspezifischen Strömungswiderstände.

Ein Verfahren nach Anspruch 7 ermöglicht eine einfache Ermittlung des jeweiligen werkzeugspezifischen Strömungswiderstandes. Aus der gemessenen Pumpendrehzahl, der bekannten Pumpenkennlinie, dem gemessenen Kühlschmiermitteldruck und dem maschinenspezifischen Strömungswiderstand ist der jeweilige werkzeugspezifische Strömungswiderstand in einfacher Weise ermittelbar. Aus der Pumpendrehzahl, der Pumpenkennlinie und dem Kühlmittelschmierdruck ist zunächst ein Gesamt-Strömungswiderstand ermittelbar. Aus dem Gesamt-Strömungswiderstand und dem bekannten maschinenspezifischen Strömungswiderstand kann anschließend der jeweilige werkzeugspezifische Strömungswiderstand ermittelt werden.

Ein Verfahren nach Anspruch 8 ermöglicht in einfacher und flexibler Weise die Berechnung von werkzeugspezifischen Reglerparametern. Dadurch, dass der jeweilige werkzeugspezifische Strömungswiderstand in Verbindung mit einer Identifikation, insbesondere einer Werkzeugidentifikation und/oder einer Werkzeugtypidentifikation, in der Steuereinrichtung gespeichert ist, steht der jeweilige werkzeugspezifische Strömungswiderstand nach einer erstmaligen Ermittlung für die Berechnung von werkzeugspezifischen Reglerparametern zur Verfügung, wenn das identische Werkzeug und/oder ein Werkzeug identischen Typs erneut zum Einsatz kommt. Durch die Speicherung des jeweiligen werkzeugspezifischen Strömungswiderstandes ist eine erneute Ermittlung somit nicht erforderlich.

Ein Verfahren nach Anspruch 9 ermöglicht in einfacher und flexibler Weise die Berechnung von werkzeugspezifischen Reglerparametern bei mehrspindligen Werkzeugmaschinen. Der maschinenspezifische Strömungswiderstand wird für jede Anzahl aktiver Werkzeugspindeln ermittelt. Bei einer zweispindligen Werkzeugmaschine werden beispielsweise ein maschinenspezifischer Strömungswiderstand für eine aktive Werkzeugspindel und ein maschinenspezifischer Strömungswiderstand für zwei aktive Werkzeugspindeln ermittelt. In Abhängigkeit der Anzahl aktiver Werkzeugspindeln wird insbesondere auch der jeweilige werkzeugspezifische Strömungswiderstand ermittelt. Die Berechnung der werkzeugspezifischen Reglerparameter erfolgt anschließend in Abhängigkeit der Anzahl aktiver Werkzeugspindeln, also des für die Anzahl aktiver Werkzeugspindeln ermittelten maschinenspezifischen Strömungswiderstandes und des jeweiligen werkzeugspezifischen Strömungswiderstandes.

Ein Verfahren nach Anspruch 10 ermöglicht eine einfache Ermittlung des jeweiligen werkzeugspezifischen Strömungswiderstandes. Bei der erstmaligen Ermittlung des jeweiligen werkzeugspezifischen Strömungswiderstandes ist eine Berechnung von optimierten Reglerparametern bzw. werkzeugspezifischen Reglerparametern nicht möglich. Zur Ermittlung des jeweiligen werkzeugspezifischen Strömungswiderstandes werden deshalb Grund-Reglerparameter zur Regelung der Pumpe verwendet, die eine stabile Regelung der Zuführung von Kühlschmiermittel gewährleisten. Die Grund-Reglerparameter werden insbesondere in Abhängigkeit des maschinenspezifischen Strömungswiderstandes berechnet. Die Ermittlung des maschinenspezifischen Strömungswiderstandes kann ebenfalls mit Grund-Reglerparametern erfolgen, die eine stabile Regelung der Zuführung von Kühlschmiermittel gewährleisten. Nach der Bestimmung des maschinenspezifischen Strömungswiderstandes und des werkzeugspezifischen Strömungswiderstandes und nach der Berechnung von werkzeugspezifischen Reglerparametern erfolgt der anschließende Betrieb nicht mit den Grund-Reglerparametern, sondern mit den werkzeugspezifischen Reglerparametern.

Ein Verfahren nach Anspruch 11 ermöglicht eine einfache und exakte Zuführung von Kühlschmiermittel. Der Kühlschmiermitteldruck ist in einfacher Weise mess- und regelbar. Vorzugsweise wird der Kühlschmiermitteldruck vor der mindestens einen Werkzeugspindel, insbesondere vor einer Verteilerstelle zur Verteilung des Kühlschmiermittels auf die Werkzeugspindeln, mittels eines Drucksensors gemessen. Vorzugsweise ist zur Messung des Kühlschmiermitteldrucks lediglich ein einziger Druckmesssensor erforderlich. Der Kühlschmiermitteldruck wird insbesondere mittels einer Pumpendrehzahl der Pumpe geregelt. Das Kühlschmiermittel wird mittels einer Druckregelung dem jeweiligen Werkzeug bzw. der Bearbeitungsstelle des jeweiligen Werkzeugs zugeführt. Die Druckregelung wird mittels der drehzahlveränderbaren Pumpe realisiert.

Ein Verfahren nach Anspruch 12 gewährleistet eine schnelle und exakte Zuführung von Kühlschmiermittel zu den Bearbeitungsstellen wechselnder Werkzeuge. Dadurch, dass nach jedem Werkzeugwechsel das Berechnen von zu dem jeweils gespannten Werkzeug gehörigen werkzeugspezifischen Reglerparametern durchgeführt wird, wird sichergestellt, dass für die Kombination aus Werkzeugmaschine, Anzahl aktiver Werkzeugspindeln und gespanntem Werkzeug zuverlässig die optimalen werkzeugspezifischen Reglerparameter berechnet und verwendet werden. Zudem kann bei der Berechnung von werkzeugspezifischen Reglerparametern in Abhängigkeit eines zu bearbeitenden Werkstücks ein gewünschter Solldruck vorgegeben und bei der Berechnung der werkzeugspezifischen Reglerparameter berücksichtigt werden.

Ein Verfahren nach Anspruch 13 ermöglicht eine schnelle und exakte Zuführung von Kühlschmiermittel. Die Pumpe ermöglicht in einfacher Weise eine Druckregelung des Kühlschmiermittels. Der Kühlschmiermitteldruck ist mittels einer Pumpendrehzahl bzw. einer Regelung der Pumpendrehzahl einfach und schnell in der gewünschten Weise veränderbar. Die Pumpendrehzahl steht als Messgröße zur Verfügung und kann insbesondere auch zur Ermittlung des maschinenspezifischen Strömungswiderstandes und des jeweiligen werkzeugspezifischen Strömungswiderstandes verwendet werden.

Ein Verfahren nach Anspruch 14 ermöglicht eine schnelle und exakte Zuführung von Kühlschmiermittel. Das Betreiben der Werkzeugmaschine erfolgt zunächst derart, dass mittels der Pumpe der Kühlschmiermitteldruck geregelt wird. Erreicht der Kühlschmiermitteldruck einen vorgegebenen Sollbereich, so wird die Druckregelung der Pumpe auf eine Drucksteuerung umgestellt. Durch den gesteuerten Betrieb der Pumpe nach Erreichen des Sollbereichs für den Kühlschmiermitteldruck wird ein negativer Einfluss eines Kühlschmiermittelstaudrucks, der während einer Werkstückbearbeitung auftritt, vermieden. Die Regelung wird somit nach dem Erreichen des Sollbereichs nicht durch den Kühlschmiermittelstaudruck beeinträchtigt.

Der Erfindung liegt ferner die Aufgabe zugrunde, eine Werkzeugmaschine zu schaffen, die in einfacher und flexibler Weise eine schnelle und exakte Zuführung von Kühlschmiermittel zu den Bearbeitungsstellen wechselnder Werkzeuge ermöglicht.

Diese Aufgabe wird durch eine Werkzeugmaschine mit den Merkmalen des Anspruchs 15 gelöst. Die Vorteile der erfindungsgemäßen Werkzeugmaschine entsprechen den bereits beschriebenen Vorteilen des erfindungsgemäßen Verfahrens. Die Steuereinrichtung kann insbesondere mit den Merkmalen mindestens eines der Ansprüche 1 bis 14 weitergebildet werden.

Eine Fertigungsanlage nach Anspruch 16 ermöglicht in einfacher und flexibler Weise eine schnelle und exakte Zuführung von Kühlschmiermittel zu den Bearbeitungsstellen wechselnder Werkzeuge, wenn mehrere Werkzeugmaschinen im Einsatz sind. Die von den einzelnen Werkzeugmaschinen ermittelten werkzeugspezifischen Strömungswiderstände werden zusammen mit einer Identifikation, insbesondere einer Werkzeugidentifikation und/oder einer Werktypenidentifikation, an die zentrale Steuereinrichtung übermittelt und dort gespeichert. Auf diese Weise wird in der zentralen Steuereinrichtung ein Werkzeugkatalog geführt. Die einzelnen Werkzeugmaschinen können auf diesen Werkzeugkatalog zugreifen, so dass in der Fertigungsanlage für jedes Werkzeug bzw. für jeden Werkzeugtyp nur einmalig der werkzeugspezifische Strömungswiderstand ermittelt werden muss. Beispielsweise können die lokalen Steuereinrichtungen der Werkzeugmaschinen in regelmäßigen Zeitabständen mit der zentralen Steuereinrichtung synchronisiert werden.

Weitere Merkmale, Vorteile und Einzelheiten der Erfindung ergeben sich aus der nachfolgenden Beschreibung eines Ausführungsbeispiels. Es zeigen:
- Fig. 1: eine schematische Ansicht einer Fertigungsanlage mit mehreren Werkzeugmaschinen und einer zentralen Steuereinrichtung,

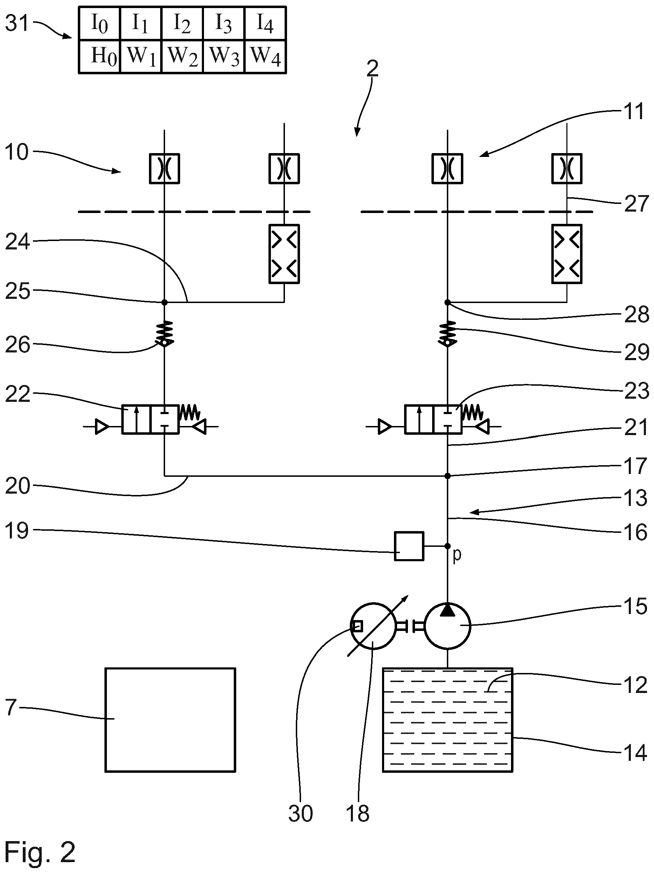

- Fig. 2: eine schematische Ansicht einer Kühlschmiereinrichtung einer der in Fig. 1 dargestellten Werkzeugmaschine zur Versorgung von zwei Werkzeugspindeln mit einem Kühlschmiermittel,
- Fig. 3: eine schematische Ansicht einer adaptiven Druckregelung zur Versorgung der Werkzeugspindeln in Fig. 2 mit dem Kühlschmiermittel,
- Fig. 4: ein Ablaufdiagramm zur Ermittlung eines maschinenspezifischen Strömungswiderstandes zur Auslegung der Druckregelung in Fig. 3,
- Fig. 5: ein Ablaufdiagramm zur Ermittlung eines werkzeugspezifischen Widerstandes des jeweiligen Werkzeugs zur Auslegung der Druckregelung in Fig. 3,
- Fig. 6: ein Ablaufdiagramm zur Berechnung von werkzeugspezifischen Reglerparametern für die Druckregelung in Fig. 3, und
- Fig.7: ein Zeitdiagramm zur Druckregelung in Fig. 3.

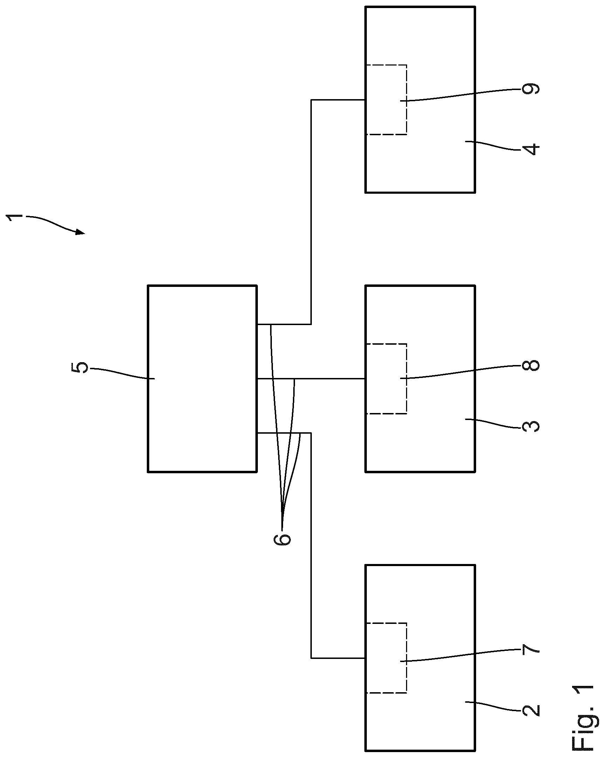

Eine Fertigungsanlage 1 umfasst mehrere Werkzeugmaschinen 2, 3, 4, die mit einer zentralen Steuereinrichtung 5 über ein Datenübertragungsnetzwerk 6 verbunden sind. Die Werkzeugmaschinen 2, 3, 4 weisen jeweils eine lokale Steuereinrichtung 7, 8, 9 auf. Die lokalen Steuereinrichtungen 7, 8, 9 sind über das Datenübertragungsnetzwerk 6 in Signalverbindung mit der zentralen Steuereinrichtung 5. Die Fertigungsanlage 1 ist in Fig. 1 veranschaulicht.

Die Werkzeugmaschine 2 weist zwei Werkzeugspindeln 10, 11 auf, die zur Versorgung mit einem Kühlschmiermittel 12 an eine Kühlschmiereinrichtung 13 angeschlossen sind. Die Kühlschmiereinrichtung 13 umfasst einen Behälter 14 zur Aufnahme des Kühlschmiermittels 12 und eine Pumpe 15 zur Förderung des Kühlschmiermittels 12 aus dem Behälter 14 über eine Zuführleitung 16 zu einer Verteilerstelle 17. Die Pumpe 15 ist mittels eines elektrischen Antriebsmotors 18 drehzahlregelbar. Mittels eines Druckmesssensors 19 ist ein Kühlschmiermitteldruck p in der Zuführleitung 16 messbar.

An der Verteilerstelle 17 teilt sich die Zuführleitung 16 in eine Zuführleitung 20, die zu der ersten Werkzeugspindel 10 führt, und in eine Zuführleitung 21, die zu der zweiten Werkzeugspindel 11 führt. Zur Zuschaltung des Kühlschmiermittels 12 ist in der Zuführleitung 20 ein erstes Ventil 22 angeordnet. Entsprechend ist in der Zuführleitung 21 ein zweites Ventil 23 angeordnet. Parallel zu der ersten Werkzeugspindel 10 bildet die Kühlschmiereinrichtung 13 einen ersten Bypass 24 aus, der nach dem ersten Ventil 22 von der Zuführleitung 20 an einer ersten Zweigstelle 25 abzweigt. Zwischen der ersten Zweigstelle 25 und dem ersten Ventil 22 ist ein erstes Rückschlagventil 26 angeordnet, um ein Leerlaufen des Leitungsabschnitts zwischen dem ersten Ventil 22 und dem ersten Rückschlagventil 26 über die erste Werkzeugspindel 10 oder den ersten Bypass 24 zu verhindern. In entsprechender Weise ist ein zweiter Bypass 27 ausgehend von einer zweiten Zweigstelle 28 parallel zu der zweiten Werkzeugspindel 11 angeordnet. Zudem ist in entsprechender Weise zwischen der zweiten Zweigstelle 28 und dem zweiten Ventil 23 ein zweites Rückschlagventil 29 angeordnet.

Der gemessene Kühlschmiermitteldruck p ist über eine Signalleitung der Steuereinrichtung 7 bereitgestellt. Der Antriebsmotor 18 weist beispielsweise einen Drehzahlmesssensor 30 zur Messung einer Pumpendrehzahl n auf, die über eine Signalleitung der Steuereinrichtung 7 bereitgestellt ist. Die Pumpendrehzahl n kann jedoch auch sensorlos über einen Umrichter ermittelt und der Steuereinrichtung 7 bereitgestellt werden. Darüber hinaus ist die Steuereinrichtung 7 in Signalverbindung mit dem Antriebsmotor 18, den Ventilen 22, 23, den Werkzeugspindeln 10, 11 und den Bypässen 24, 27.

Die Werkzeugmaschine 2 ist darüber hinaus in üblicher Weise aufgebaut. Zur Bereitstellung von verschiedenen Werkzeugen W₁ bis W₄ weist die Werkzeugmaschine 2 ein Werkzeugmagazin 31 auf, in dem die Werkzeuge W₁ bis W₄ mit einer zugehörigen Identifikation I₁ bis I₄ vorgehalten sind. Die Werkzeuge W₁ bis W₄ sind beispielsweise in zugehörigen Werkzeughaltern befestigt, mittels denen die Werkzeuge W₁ bis W₄ in Werkzeugaufnahmen der Werkzeugspindeln 10, 11 in üblicher Weise spannbar sind. Zusätzlich sind in dem Werkzeugmagazin 31 leere Werkzeughalter H₀ mit der Identifikation I₀ vorgehalten. Die Werkzeughalter H₀ haben beispielsweise einen Mindestdurchmesser von 30 mm.

Die Werkzeugmaschinen 3, 4 sind baugleich und/oder unterschiedlich zu der Werkzeugmaschine 2. Die Werkzeugmaschinen 3, 4 weisen Kühlschmiereinrichtungen entsprechend der Kühlschmiereinrichtung 13 auf. Die Kühlschmiereinrichtungen dienen je nach Aufbau der Werkzeugmaschinen 3, 4 zur Versorgung einer Werkzeugspindel und/oder zur Versorgung von zwei Werkzeugspindeln.

Nachfolgend ist eine adaptive Druckregelung 32 der Werkzeugmaschine 2 beschrieben. In der Steuereinrichtung 7 ist ein adaptiver Druckregler 33 implementiert, der als Eingangsgrößen einen Solldruck ps, den gemessenen Kühlschmiermitteldruck p, eine Anzahl N der aktiven Werkzeugspindeln 10, 11, einen maschinenspezifischen Strömungswiderstand R_{M}(N) und einen werkzeugspezifischen Strömungswiderstand R_{W}(W) hat. Der maschinenspezifische Strömungswiderstand R_{M}(N) und der werkzeugspezifische Strömungswiderstand R_{W}(W) sind zunächst unbekannt. Zusätzlich hat der Druckregler 33 als Eingangsgröße eine Pumpenkennlinie K, die bekannt ist. Die Pumpenkennlinie K wird beispielsweise von einem Pumpenhersteller zur Verfügung gestellt.

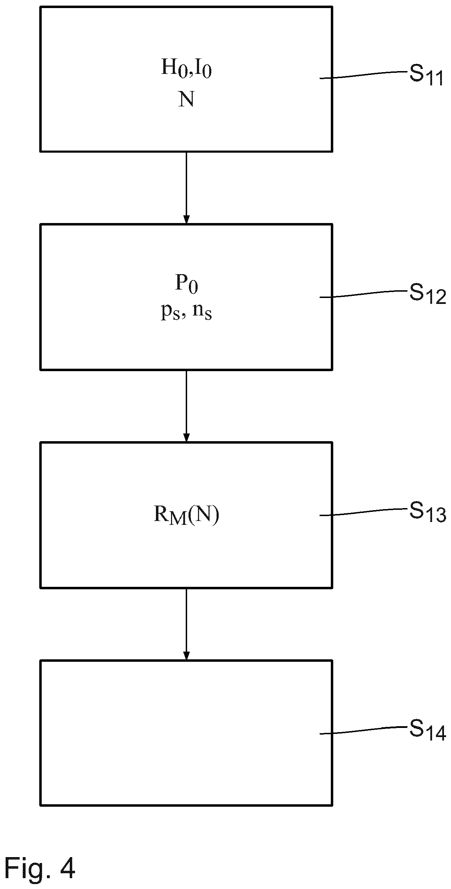

Zur Parametrierung der adaptiven Druckregelung 32 wird zunächst der maschinenspezifische Strömungswiderstand R_{M}(N) ermittelt. Dies ist in Fig. 4 veranschaulicht. Hierzu wird mittels der Steuereinrichtung 7 ein Programmablauf zur Ermittlung des maschinenspezifischen Strömungswiderstandes R_{M}(N) ausgewählt. In einem ersten Schritt S₁₁ werden aus dem Werkzeugmagazin 31 die leeren Werkzeughalter H₀ in die Werkzeugspindeln 10, 11 gespannt. Für die Anzahl aktiver Werkzeugspindeln 10, 11 gilt zunächst N = 1, das bedeutet, dass beispielsweise nur die Werkzeugspindel 10 oder nur die Werkzeugspindel 11 aktiv ist. Hierzu ist eines der Ventile 22, 23 geöffnet und das entsprechend andere Ventil 22, 23 geschlossen.

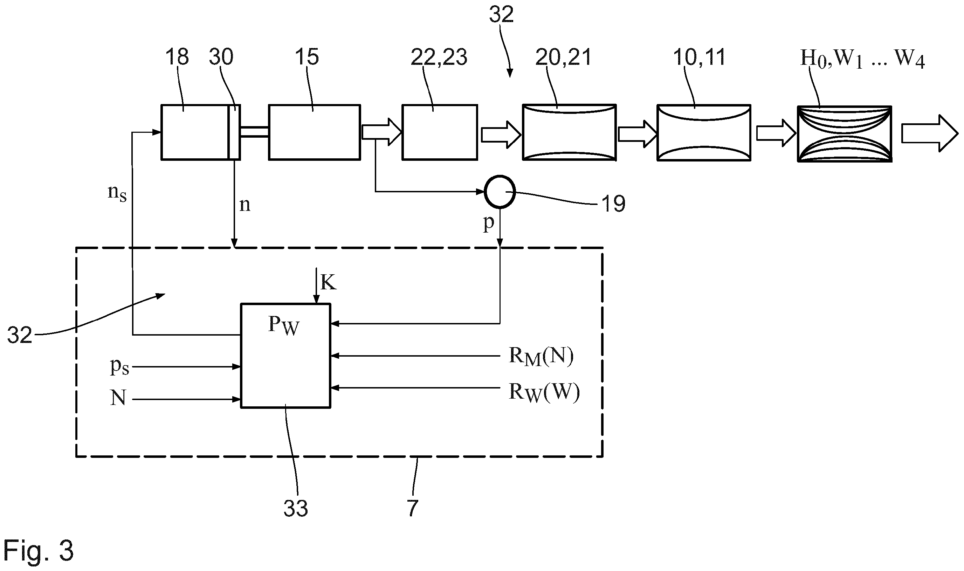

Anschließend wird der Druckregler 33 im Schritt S₁₂ mit Grund-Reglerparametern P₀ parametriert, die eine stabile Druckregelung gewährleisten. Dem Druckregler 33 wird ein Solldruck ps vorgegeben, der von dem Druckregler 33 in eine Solldrehzahl ns für die Pumpe 15 bzw. den Antriebsmotor 18 umgesetzt wird. Im anschließenden Betrieb der Werkzeugmaschine 2 werden die Drehzahl n und der Kühlschmiermitteldruck p gemessen und in der Steuereinrichtung 7 erfasst. Der Antriebsmotor 18 weist zur Einregelung des Solldrucks ps einen unterlagerten Drehzahlregelkreis auf, der in Fig. 3 nicht näher dargestellt ist. Bei der Ermittlung des maschinenspezifischen Strömungswiderstandes R_{M} wird die Pumpe 15 beispielsweise mit maximaler Drehzahl betrieben.

In einem anschließenden Schritt S₁₃ berechnet die Steuereinrichtung 7 für die Anzahl N = 1 aus dem gemessenen Kühlschmiermitteldruck p, der gemessenen Pumpendrehzahl n und der Pumpenkennlinie K den maschinenspezifischen Strömungswiderstand R_{M}(N). Die Pumpenkennlinie K charakterisiert beispielsweise einen Volumenstrom und/oder einen erzeugten Pumpendruck in Abhängigkeit der Pumpendrehzahl n.

Der ermittelte maschinenspezifische Strömungswiderstand R_{M}(N) wird anschließend in einem Schritt S₁₄ in den Maschinendaten der Steuereinrichtung 7 abgespeichert und steht im weiteren Betrieb der Werkzeugmaschine 2 zur Verfügung.

Die Schritte S₁₁ bis S₁₄ werden anschließend - soweit erforderlich - mit den offenen Ventilen 22, 23 für die Anzahl N = 2 wiederholt. Es wird somit der maschinenspezifische Strömungswiderstand R_{M}(N) für zwei aktive Werkzeugspindeln 10, 11 ermittelt und in der Steuereinrichtung 7 abgespeichert.

Der maschinenspezifische Strömungswiderstand R_{M}(N) charakterisiert ausschließlich den Strömungswiderstand der Maschineninstallation in Abhängigkeit der Anzahl N der aktiven Werkzeugspindeln 10, 11. Der maschinenspezifische Strömungswiderstand R_{M}(N) ist unabhängig von einem in der jeweiligen Werkzeugspindel 10, 11 gespannten Werkzeug.

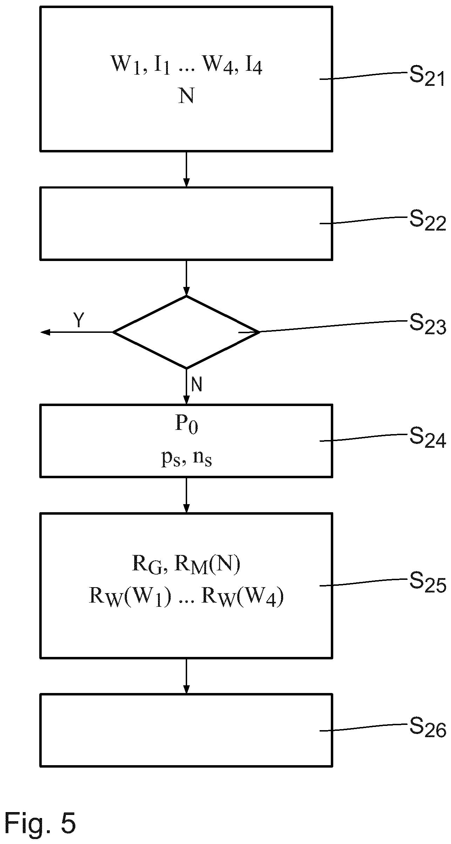

Die Ermittlung des werkzeugspezifischen Strömungswiderstands R_{W}(W₁) ist nachfolgend anhand von Fig. 5 beschrieben. Hierzu wird ein in der Steuereinrichtung 7 implementiertes Programm gestartet, das in einem Schritt S₂₁ einen Werkzeugwechsel durchführt, so dass das Werkzeug W₁ mit der Identifikation I₁ in der ersten Werkzeugspindel 10 gespannt wird. Der werkzeugspezifische Strömungswiderstand R_{W}(W₁) wird während des Bearbeitungsablaufs automatisch ermittelt, wenn für das Werkzeug W₁ kein werkzeugspezifischer Strömungswiderstand R_{W}(W₁) gespeichert ist. Ein spezielles Messprogramm wird nicht benötigt bzw. gestartet. Das erste Ventil 22 wird geöffnet, wohingegen das zweite Ventil 23 geschlossen wird, so dass die Werkzeugmaschine 2 mit der aktiven Werkzeugspindel 10 betrieben wird. Alternativ oder zusätzlich kann in der zweiten Werkzeugspindel 11 ein Werkzeug W₁ gespannt werden und die Werkzeugmaschine 2 mit einer aktiven Werkzeugspindel 11 oder mit zwei aktiven Werkzeugspindeln 10, 11 betrieben werden. Die Anzahl N wird der Steuereinrichtung 7 vorgegeben.

Anschließend wird in einem Schritt S₂₂ anhand der Identifikation I₁ in der Steuereinrichtung 7 überprüft, ob zu dem Werkzeug W₁ bereits ein werkzeugspezifischer Strömungswiderstand R_{W}(W₁) gespeichert ist. Ist ein werkzeugspezifischer Strömungswiderstand R_{W}(W₁) bereits gespeichert, wird dieser in einem Schritt S₂₃ ausgelesen und für die folgenden Berechnungen verwendet.

Ist kein werkzeugspezifischer Strömungswiderstand R_{W}(W₁) gespeichert, so wird in einem nachfolgenden Schritt S₂₄ der Druckregler 33 mit Grund-Reglerparametern P₀ parametriert. Dem Druckregler 33 wird ein Solldruck ps sowie die Anzahl N aktiver Werkzeugspindeln 10, 11 vorgegeben. Beim anschließenden testweisen Betrieb der Werkzeugmaschine 2 wird der Kühlschmiermitteldruck p gemessen und der Solldruck ps mittels des Druckreglers 33 eingeregelt. Hierzu gibt der Druckregler 33 die Pumpendrehzahl ns vor, die mittels des elektrischen Antriebsmotors 18 eingeregelt wird. Die Pumpendrehzahl n wird gemessen und einem unterlagerten Drehzahlregelkreis zugeführt.

In einem nachfolgenden Schritt S₂₅ wird der werkzeugspezifische Strömungswiderstand R_{W}(W₁) für das Werkzeug W₁ berechnet. Hierzu wird zunächst aus dem gemessenen Kühlschmiermitteldruck p, der gemessenen Pumpendrehzahl n und der Pumpenkennlinie K ein Gesamt-Strömungswiderstand R_{G} berechnet. Aus dem berechneten Gesamt-Strömungswiderstand R_{G} wird anschließend der werkzeugspezifische Strömungswiderstand R_{W}(W₁) berechnet, indem von dem Gesamt-Strömungswiderstand R_{G} der maschinenspezifische Strömungswiderstand R_{M}(N) subtrahiert wird. Je nach Anzahl N aktiver Werkzeugspindeln 10, 11 wird von dem Gesamt-Strömungswiderstand R_{G} der ermittelte maschinenspezifische Strömungswiderstand R_{M}(N) für eine aktive Werkzeugspindel oder der ermittelte maschinenspezifische Strömungswiderstand R_{M}(N) für zwei aktive Werkzeugspindeln 10, 11 subtrahiert.

Anschließend wird in einem Schritt S₂₆ der berechnete werkzeugspezifische Strömungswiderstand R_{W}(W₁) für das Werkzeug W₁ zusammen mit der Identifikation I₁ in den Werkzeugdaten der Steuereinrichtung 7 abgespeichert.

Die Schritte S₂₁ bis S₂₆ werden für die weiteren Werkzeuge W₂ bis W₄ und die zugehörigen Identifikationen I₂ bis I₄ wiederholt. Alternativ kann nach der Ermittlung des werkzeugspezifischen Strömungswiderstands R_{W}(W₁) mit der Bearbeitung eines Werkstücks mittels des Werkzeugs W₁ begonnen werden und mit der Ermittlung des jeweiligen werkzeugspezifischen Strömungswiderstandes R_{W}(W₂) bis R_{W}(W₄) gewartet werden, bis eine Bearbeitung mit dem jeweiligen Werkzeug W₂ bis W₄ vorgesehen ist.

Die Identifikationen I₁ bis I₄ sind beispielsweise eine Werkzeugidentifikation des speziellen Werkzeugs W₁ bis W₄ und/oder eine Werkzeugtypidentifikation von Werkzeugen W₁ bis W₄, die demselben Werkzeugtyp angehören und deshalb übereinstimmende werkzeugspezifische Strömungswiderstände R_{W}(W) haben.

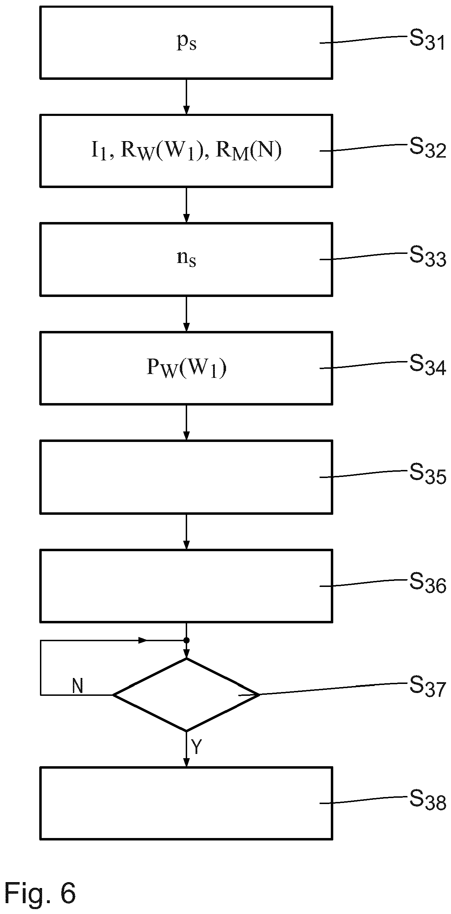

Nach der Ermittlung des maschinenspezifischen Strömungswiderstandes R_{M}(N) und des werkzeugspezifischen Strömungswiderstandes R_{W}(W₁) wird die Werkzeugmaschine 2 mit dem Werkzeug W₁ und einer adaptiven Druckregelung 32 betrieben. Dies ist in Fig. 6 veranschaulicht. Hierzu wird zunächst in einem Schritt S₃₁ das Bearbeitungsprogramm bzw. das NC-Programm in die Steuereinrichtung 7 geladen. Das Bearbeitungsprogramm enthält Ein- und Ausschaltzeitpunkte der Kühlschmiereinrichtung 13 und den Solldruck ps.

Anhand der Identifikation I₁ wird aus der Steuereinrichtung 7 der abgespeicherte werkzeugspezifische Strömungswiderstand R_{W}(W₁) des Werkzeugs W₁ in einem Schritt S₃₂ ausgelesen.

In einem nachfolgenden Schritt S₃₃ wird aus dem Solldruck ps und der Pumpenkennlinie K die Solldrehzahl ns der Pumpe 15 berechnet, die dem unterlagerten Drehzahlregelkreis als Vorsteuerwert bzw. Startdrehzahl vorgegeben wird. Die Startdrehzahl wird in Abhängigkeit der Anzahl N, des zugehörigen maschinenspezifischen Strömungswiderstandes R_{M}(N), des werkzeugspezifischen Strömungswiderstandes R_{W}(W₁) des Werkzeugs W₁ und des Solldrucks ps berechnet.

In einem nachfolgenden Schritt S₃₄ werden werkzeugspezifische Reglerparameter Pw berechnet, mit denen der Druckregler 33 parametriert wird. Der Druckregler 33 ist beispielsweise ein PI-Regler oder PID-Regler. Die Reglerparameter P_{W} sind abhängig von der gewählten Maschineninstallation bzw. der Anzahl N aktiver Werkzeugspindeln 10, 11 und dem jeweils verwendeten Werkzeug W₁ bis W₄. Dementsprechend wird der Druckregler 33 maschinen- und werkzeugspezifisch parametriert, so dass die Druckregelung 32 adaptiv ist.

Die werkzeugspezifischen Reglerparameter P_{W} können für die jeweils gewählte spezielle Maschinen- und Werkzeugkonstellation abgespeichert werden, so dass diese für einen nachfolgenden Betrieb der Werkzeugmaschine 2 mit derselben Maschinen- und Werkzeugkonstellation zur Verfügung stehen. Alternativ können die Schritte S₃₁ bis S₃₄ nach jedem Werkzeugwechsel und/oder nach jeder Änderung der Anzahl N aktiver Werkzeugspindeln 10, 11 wiederholt werden, so dass eine Speicherung nicht erforderlich ist.

In einem nachfolgenden Schritt S₃₅ wird die Pumpe 15 mittels des Antriebsmotors 18 gestartet. Die Solldrehzahl ns wird in Form einer Sprungfunktion als Vorsteuerwert vorgegeben. Die Werkzeugmaschine 2 wird mit den werkzeugspezifischen Reglerparametern P_{W} und dem Werkzeug W₁ betrieben.

Anschließend wird in einem Schritt S₃₆ die Pumpendrehzahl n und der Kühlschmiermitteldruck p mittels der adaptiven Druckregelung 32 erhöht, bis beispielsweise die Pumpendrehzahl n bzw. der Kühlschmiermitteldruck p einen Sollbereich Δ erreichen. Der vorgegebene Solldruck ps wird mittels des adaptiven Druckreglers 33 und eines unterlagerten Drehzahlregelkreises geregelt.

In einem Schritt S₃₇ wird regelmäßig abgefragt, ob der Sollbereich Δ erreicht ist. Ist der Sollbereich Δ noch nicht erreicht, so ist die Druckregelung 32 weiterhin aktiv. Ist demgegenüber der Sollbereich Δ erreicht, so wird in einem Schritt S₃₈ die Druckregelung 32 abgeschaltet und die erreichte Drehzahl n der Pumpe 15 eingefroren. Die Pumpe 15 wird somit gesteuert weiterbetrieben.

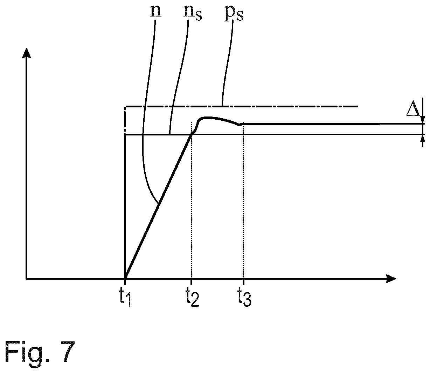

In Fig. 7 ist die Funktion der adaptiven Druckregelung 32 veranschaulicht. Zum Zeitpunkt t₁ wird der Solldruck ps und die Solldrehzahl ns als Sprungfunktion vorgegeben. Die Solldrehzahl ns wird als Vorsteuerwert bzw. errechnete Startdrehzahl vorgegeben. Anschließend beschleunigt der Antriebsmotor 18 bzw. die Pumpe 15 mit maximalem Drehmoment auf die Solldrehzahl ns. Im Zeitpunkt t₂ erreicht die gemessene Pumpendrehzahl n die Solldrehzahl ns. Der Druckregler 33 korrigiert die Pumpendrehzahl n bis diese in dem Sollbereich Δ liegt. Dies ist zum Zeitpunkt t₃ der Fall. Anschließend wird die Pumpendrehzahl n eingefroren. Die Pumpe 15 wird also lediglich noch gesteuert. Hierdurch werden negative Einflüsse auf die Druckregelung 32 infolge von Staudruck während der Werkstückbearbeitung vermieden.

Die von den Werkzeugmaschinen 2, 3, 4 ermittelten werkzeugspezifischen Strömungswiderstände R_{W} werden in regelmäßigen Zeitabständen an die zentrale Steuereinrichtung 5 übermittelt und dort als Werkzeugkatalog gespeichert. Die in der zentralen Steuereinrichtung 5 gespeicherten werkzeugspezifischen Strömungswiderstände R_{W} werden wiederum an die lokalen Steuereinrichtungen 7, 8, 9 übermittelt, so dass sich die lokalen Steuereinrichtungen 7, 8, 9 untereinander synchronisieren. Auf diese Weise muss jeder werkzeugspezifische Strömungswiderstand R_{W} in der Fertigungsanlage 1 nur einmalig ermittelt werden.

Die adaptive Kühlschmiermittel-Druckregelung 32 ermöglicht in einfacher und flexibler Weise eine schnelle und exakte Zuführung von Kühlschmiermittel 12 zu den Bearbeitungsstellen wechselnder Werkzeuge W₁ bis W₄. Die Regelstrecken mit dem Antriebsmotor 18, der Pumpe 15, der Maschineninstallation und der Werkzeugspindel 10 bzw. 11 sowie einem jeweils darin gespannten Werkzeug W₁ bis W₄ werden automatisch vermessen. Hierzu werden Grund-Reglerparameter P₀ verwendet. Aus den sich ergebenden Kühlschmiermitteldrücken p und Pumpendrehzahlen n können für das jeweilige Werkzeug W₁ bis W₄ zugehörige werkzeugspezifische Strömungswiderstände Rw berechnet werden und zusammen mit einem maschinenspezifischen Strömungswiderstand R_{M} werkzeugspezifische Reglerparameter P_{W} für das jeweilige Werkzeug W₁ bis W₄ errechnet werden. Die werkzeugspezifischen Strömungswiderstände R_{W} für das jeweilige Werkzeug W₁ bis W₄ werden im Bereich der Werkzeugdaten der lokalen Steuereinrichtung 7, 8, 9 der jeweiligen Werkzeugmaschine 2, 3, 4 abgespeichert. Die adaptive Druckregelung 32 ermöglicht hierdurch eine schnelle und stabile Bereitstellung des Kühlschmiermittels 12. Das Reglerergebnis ist hierbei im Wesentlichen unabhängig vom verwendeten Werkzeug W₁ bis W₄. Der maschinenspezifische Strömungswiderstand R_{M} wird in Abhängigkeit der Anzahl N aktiver Werkzeugspindeln 10, 11 ermittelt, so dass die werkzeugspezifischen Reglerparameter Pw in Abhängigkeit einer einspindligen bzw. zweispindligen Bearbeitung berechnet werden. Die adaptive Druckregelung 32 stellt sich somit auf die fluiddynamischen Eigenschaften der jeweiligen Werkzeugmaschine 2, 3, 4 und des jeweils verwendeten Werkzeugs W₁ bis W₄ ein. Die Vermessung der Strömungswiderstände R_{M} und R_{W} erfolgt automatisch. Hierdurch können kürzere Inbetriebnahmezeiten realisiert werden. Erstmals verwendete Werkzeuge können problemlos in die Fertigungsanlage 1 integriert werden. Durch die adaptive Druckregelung 32 wird eine schnelle Bereitstellung des Kühlschmiermittels 12 ohne bzw. ohne ein nennenswertes Überschwingen in der Druckregelung ermöglicht. Dies schont den Antriebsmotor 18 bzw. die Pumpe 15. Die Strömungswiderstände R_{M} bzw. R_{W} werden über die Fördermenge der Pumpe 15, also die Pumpendrehzahl n und die Pumpenkennlinie K und den Druckverlust bis zu dem Druckmesssensor 19 berechnet. Aus dem ermittelten spezifischen Strömungswiderstand R_{M} können Grund-Reglerparameter P₀ für die Ermittlung des jeweiligen werkzeugspezifischen Strömungswiderstandes R_{W} berechnet werden.

## Patentansprüche

1. Verfahren zum Betreiben einer Werkzeugmaschine mit den Schritten:
- Bereitstellen einer Werkzeugmaschine (2, 3, 4), umfassend
-- mindestens eine Werkzeugspindel (10, 11), und
-- eine Kühlschmiereinrichtung (13) mit einer Pumpe (15) zum Versorgen der mindestens einen Werkzeugspindel (10, 11) mit einem Kühlschmiermittel (12),
- Spannen eines Werkzeugs (W₁ bis W₄) in der mindestens einen Werkzeugspindel (10, 11),
- Berechnen von werkzeugspezifischen Reglerparametern (P_{W}) zur Regelung der Pumpe (15) anhand eines maschinenspezifischen Strömungswiderstandes (R_{M}) für das Kühlschmiermittel (12) und eines werkzeugspezifischen Strömungswiderstands (R_{W}) für das Kühlschmiermittel (12), und
- Betreiben der Werkzeugmaschine (2, 3, 4) mit den werkzeugspezifischen Reglerparametern (P_{W}).

2. Verfahren nach Anspruch 1, **dadurch gekennzeichnet,**
**dass** der maschinenspezifische Strömungswiderstand (R_{M}) durch Betreiben der Werkzeugmaschine (2, 3, 4) ohne ein gespanntes Werkzeug (W₁ bis W₄) ermittelt ist.

3. Verfahren nach Anspruch 1 oder 2, **dadurch gekennzeichnet,**
**dass** der maschinenspezifische Strömungswiderstand (R_{M}) aus einer Pumpendrehzahl (n), einer Pumpenkennlinie (K) und einem Kühlschmiermitteldruck (p) ermittelt ist.

4. Verfahren nach einem der Ansprüche 1 bis 3, **dadurch gekennzeichnet,**
**dass** der maschinenspezifische Strömungswiderstand (R_{M}) in einer Steuereinrichtung (7, 8, 9) gespeichert ist.

5. Verfahren nach einem der Ansprüche 1 bis 4, **dadurch gekennzeichnet,**
**dass** der werkzeugspezifische Strömungswiderstand (R_{W}) durch Betreiben der Werkzeugmaschine (2, 3, 4) mit dem in der mindestens einen Werkzeugspindel (10, 11) gespannten Werkzeug (W₁ bis W₄) ermittelt ist.

6. Verfahren nach einem der Ansprüche 1 bis 5, **dadurch gekennzeichnet,**
**dass** der werkzeugspezifische Strömungswiderstand (R_{W}) aus einem Gesamt-Strömungswiderstand (R_{G}) und dem maschinenspezifischen Strömungswiderstand (R_{M}) ermittelt ist.

7. Verfahren nach einem der Ansprüche 1 bis 6, **dadurch gekennzeichnet,**
**dass** der werkzeugspezifische Strömungswiderstand (R_{W}) aus einer Pumpendrehzahl (n), einer Pumpenkennlinie (K), einem Kühlschmiermitteldruck (p) und dem maschinenspezifischen Strömungswiderstand (R_{M}) ermittelt ist.

8. Verfahren nach einem der Ansprüche 1 bis 7, **dadurch gekennzeichnet,**
**dass** der werkzeugspezifische Strömungswiderstand (R_{W}) in Verbindung mit einer Identifikation (I₁ bis I₄), insbesondere einer Werkzeugidentifikation und/oder einer Werkzeugtypidentifikation, in einer Steuereinrichtung (7, 8, 9) gespeichert ist.

9. Verfahren nach einem der Ansprüche 1 bis 8, **dadurch gekennzeichnet,**
**dass** der maschinenspezifische Strömungswiderstand (R_{M}) und/oder der werkzeugspezifische Strömungswiderstand (R_{W}) in Abhängigkeit einer Anzahl (N) aktiver Werkzeugspindeln (10, 11) ermittelt ist.

10. Verfahren nach einem der Ansprüche 1 bis 9, **dadurch gekennzeichnet,**
**dass** der werkzeugspezifische Strömungswiderstand (R_{W}) mit Grund-Reglerparametern (P₀) zur Regelung der Pumpe (15) ermittelt ist.

11. Verfahren nach einem der Ansprüche 1 bis 10, **dadurch gekennzeichnet,**
**dass** ein Kühlschmiermitteldruck (p) gemessen wird.

12. Verfahren nach einem der Ansprüche 1 bis 11, **dadurch gekennzeichnet,**
**dass** nach einem Werkzeugwechsel das Berechnen von werkzeugspezifischen Reglerparametern (P_{W}) wiederholt wird.

13. Verfahren nach einem der Ansprüche 1 bis 12, **dadurch gekennzeichnet,**
**dass** beim Betreiben der Werkzeugmaschine (2, 3, 4) ein Kühlschmiermitteldruck (p) mittels der Pumpe (15) geregelt wird.

14. Verfahren nach einem der Ansprüche 1 bis 13, **dadurch gekennzeichnet,**
**dass** beim Betreiben der Werkzeugmaschine (2, 3, 4) die Pumpe (15) geregelt und nach dem Erreichen eines Sollbereichs (Δ) die Pumpe (15) gesteuert wird.

15. Werkzeugmaschine, umfassend
- mindestens eine Werkzeugspindel (10, 11),
- eine Kühlschmiereinrichtung (13) mit einer Pumpe (15) zum Versorgen der mindestens einen Werkzeugspindel (10, 11) mit einem Kühlschmiermittel (12), und
- eine Steuereinrichtung (7, 8, 9),
**dadurch gekennzeichnet,**
**dass** die Steuereinrichtung (7, 8, 9) derart ausgebildet ist, dass anhand eines maschinenspezifischen Strömungswiderstandes (R_{M}) für das Kühlschmiermittel (12) und eines werkzeugspezifischen Strömungswiderstandes (R_{W}) für das Kühlschmiermittel (12) werkzeugspezifische Reglerparameter (P_{W}) zur Regelung der Pumpe (15) berechenbar sind.

16. Fertigungsanlage mit mehreren Werkzeugmaschinen (2, 3, 4) nach Anspruch 15 und einer zentralen Steuereinrichtung (5).

## Claims

1. Method for operating a machine tool having the following steps:
- providing a machine tool (2, 3, 4), comprising
-- at least one tool spindle (10, 11), and
-- a coolant lubricant device (13) having a pump (15) for supplying the at least one tool spindle (10, 11) with a coolant lubricant (12),
- chucking a tool (Wi to W₄) in the at least one tool spindle (10, 11),
- computing tool-specific regulator parameters (P_{W}) for regulating the pump (15) on the basis of a machine-specific flow resistance (R_{M}) for the coolant lubricant (12) and a tool-specific flow resistance (R_{W}) for the coolant lubricant (12), and
- operating the machine tool (2, 3, 4) using the tool-specific regulator parameters (P_{W}).

2. Method as claimed in claim 1, **characterized in that** the machine-specific flow resistance (R_{M}) is ascertained by operating the machine tool (2, 3, 4) without a chucked tool (W₁ to W₄).

3. Method as claimed in claim 1 or 2, **characterized in that** the machine-specific flow resistance (R_{M}) is ascertained from a pump speed (n), a pump characteristic curve (K), and a coolant lubricant pressure (p).

4. Method as claimed in any one of claims 1 to 3, **characterized in that** the machine-specific flow resistance (R_{M}) is stored in a control device (7, 8, 9).

5. Method as claimed in any one of claims 1 to 4, **characterized in that** the tool-specific flow resistance (R_{W}) is ascertained by operating the machine tool (2, 3, 4) using the tool (W₁ to W₄) chucked in the at least one tool spindle (10, 11).

6. Method as claimed in any one of claims 1 to 5, **characterized in that** the tool-specific flow resistance (R_{W}) is ascertained from an overall flow resistance (R_{G}) and the machine-specific flow resistance (R_{M}).

7. Method as claimed in any one of claims 1 to 6, **characterized in that** the tool-specific flow resistance (R_{W}) is ascertained from a pump speed (n), a pump characteristic curve (K), a coolant lubricant pressure (p), and the machine-specific flow resistance (R_{M}).

8. Method as claimed in any one of claims 1 to 7, **characterized in that** the tool-specific flow resistance (R_{W}) is stored in conjunction with an identification (I₁ to I₄), in particular a tool identification and/or a tool type identification, in a control device (7, 8, 9).

9. Method as claimed in any one of claims 1 to 8, **characterized in that** the machine-specific flow resistance (R_{M}) and/or the tool-specific flow resistance (R_{W}) is ascertained in dependence on a number (N) of active tool spindles (10, 11).

10. Method as claimed in any one of claims 1 to 9, **characterized in that** the tool-specific flow resistance (R_{W}) is ascertained using basic regulator parameters (P₀) for regulating the pump (15).

11. Method as claimed in any one of claims 1 to 10, **characterized in that** a coolant lubricant pressure (p) is measured.

12. Method as claimed in any one of claims 1 to 11, **characterized in that** the computation of tool-specific regulator parameters (P_{W}) is repeated after a tool change.

13. Method as claimed in any one of claims 1 to 12, **characterized in that** during operation of the machine tool (2, 3, 4), a coolant lubricant pressure (p) is regulated by means of the pump (15).

14. Method as claimed in any one of claims 1 to 13, **characterized in that** during operation of the machine tool (2, 3, 4), the pump (15) is regulated and after reaching a target range (Δ), the pump (15) is controlled.

15. Machine tool, comprising
- at least one tool spindle (10, 11),
- a coolant lubricant device (13) having a pump (15) for supplying the at least one tool spindle (10, 11) with a coolant lubricant (12), and
- a control device (7, 8, 9),
**characterized in that**
the control device (7, 8, 9) is designed in such a way that tool-specific regulator parameters (P_{W}) for regulating the pump (15) can be computed on the basis of a machine-specific flow resistance (R_{M}) for the coolant lubricant (12) and a tool-specific flow resistance (R_{W}) for the coolant lubricant (12).

16. Manufacturing facility having multiple machine tools (2, 3, 4) as claimed in claim 15 and a central control device (5).

## Revendications

1. Procédé de fonctionnement d'une machine-outil comprenant les étapes suivantes :
- la mise à disposition d'une machine-outil (2, 3, 4) comprenant
-- au moins une broche à outils (10, 11), et
-- un dispositif de refroidissement et de lubrification (13) avec une pompe (15) pour alimenter au moins une broche à outils (10, 11) avec un lubrifiant de refroidissement (12),
- le serrage d'un outil (W₁ à W₄) dans l'au moins une broche à outils (10, 11),
- le calcul des paramètres de régulateur spécifiques à l'outil (P_{W}) pour régler la pompe (15) sur la base d'une résistance à l'écoulement spécifique à la machine (R_{M}) pour le lubrifiant de refroidissement (12) et d'une résistance à l'écoulement spécifique à l'outil (R_{W}) pour le lubrifiant de refroidissement (12), et
- faire fonctionner la machine-outil (2, 3, 4) avec les paramètres de régulateur spécifiques à l'outil (P_{W}).

2. Procédé selon la revendication 1, **caractérisé en ce que** la résistance à l'écoulement spécifique à la machine (R_{M}) est déterminée en faisant fonctionner la machine-outil (2, 3, 4) sans outil serré (W₁ à W₄).

3. Procédé selon la revendication 1 ou 2, **caractérisé en ce que** la résistance à l'écoulement spécifique à la machine (R_{M}) est déterminée à partir d'une vitesse de rotation de la pompe (n), d'une courbe caractéristique de la pompe (K) et d'une pression du lubrifiant de refroidissement (p).

4. Procédé selon l'une quelconque des revendications 1 à 3, **caractérisé en**
**ce que** la résistance à l'écoulement spécifique à la machine (R_{M}) est enregistrée dans un dispositif de commande (7, 8, 9).

5. Procédé selon l'une quelconque des revendications 1 à 4, **caractérisé en**
**ce que** la résistance à l'écoulement spécifique à l'outil (R_{W}) est déterminée en faisant fonctionner la machine-outil (2, 3, 4) avec l'outil (W₁ à W₄) serré dans l'au moins une broche à outils (10, 11).

6. Procédé selon l'une quelconque des revendications 1 à 5, **caractérisé en**
**ce que** la résistance à l'écoulement spécifique à l'outil (R_{W}) est déterminée à partir d'une résistance à l'écoulement totale (R_{G}) et de la résistance à l'écoulement spécifique à la machine (R_{M}).

7. Procédé selon l'une quelconque des revendications 1 à 6, **caractérisé en**
**ce que** la résistance à l'écoulement spécifique à l'outil (R_{W}) est déterminée à partir d'une vitesse de rotation de la pompe (n), d'une courbe caractéristique de la pompe (K), d'une pression du lubrifiant de refroidissement (p) et de la résistance à l'écoulement spécifique à la machine (R_{M}).

8. Procédé selon l'une quelconque des revendications 1 à 7, **caractérisé en**
**ce que** la résistance à l'écoulement spécifique à l'outil (R_{W}) en combinaison avec une identification (I₁ bis I₄), en particulier une identification de l'outil et/ou une identification du type d'outil, est enregistrée dans un dispositif de commande (7, 8, 9).

9. Procédé selon l'une quelconque des revendications 1 à 8, **caractérisé en**
**ce que** la résistance à l'écoulement spécifique à la machine (R_{M}) et/ou la résistance à l'écoulement spécifique à l'outil (R_{W}) est déterminée en fonction d'un nombre (N) de broches à outils actives (10, 11).

10. Procédé selon l'une quelconque des revendications 1 à 9, **caractérisé en**
**ce que** la résistance à l'écoulement spécifique à l'outil (R_{W}) est déterminée avec les paramètres de base de régulateur (P₀) pour régler la pompe (15).

11. Procédé selon l'une quelconque des revendications 1 à 10, **caractérisé en**
**ce que** une pression de lubrifiant de refroidissement (p) est mesurée.

12. Procédé selon l'une quelconque des revendications 1 à 11, **caractérisé en**
**ce que** le calcul des paramètres de régulateur spécifiques à l'outil (P_{W}) est répété après un changement d'outil.

13. Procédé selon l'une quelconque des revendications 1 à 12, **caractérisé en**
**ce qu'**au cours du service de la machine-outil (2, 3, 4), une pression de lubrifiant de refroidissement (p) est réglée par le biais de la pompe (15).

14. Procédé selon l'une quelconque des revendications 1 à 13, **caractérisé en**
**ce que** la pompe (15) est réglée lorsque la machine-outil (2, 3, 4) est en service et la pompe (15) est commandée après qu'une plage de valeurs de consigne (Δ) a été atteinte.

15. Machine-outil comprenant
- au moins une broche à outils (10, 11),
- un dispositif de refroidissement et de lubrification (13) avec une pompe (15) pour alimenter au moins une broche à outils (10, 11) avec un lubrifiant de refroidissement (12), et
- un dispositif de commande (7, 8, 9),
**caractérisé en**
**ce que** le dispositif de commande (7, 8, 9) est conçu de telle sorte que des paramètres de régulateur spécifiques à l'outil (P_{W}) pour régler la pompe (15) peuvent être calculés sur la base d'une résistance à l'écoulement spécifique à la machine (R_{M}) pour le lubrifiant de refroidissement (12) et d'une résistance à l'écoulement spécifique à l'outil (R_{W}) pour le lubrifiant de refroidissement (12).

16. Installation de fabrication comprenant une pluralité de machines-outils (2, 3, 4) selon la revendication 15 et un dispositif de commande central (5).
